# EUROPEAN PATENT APPLICATION

(11) **EP 2 497 775 A1**
(43) Date of publication of application: **12.09.2012**
(21) Application number: 11002059.1
(22) Date of filing: 11.03.2011
(51) Int. Cl.: C07F 17/02, A61K 31/28

(54) **Ferrocene-based compounds and their use as ROS regulating prodrugs**

(71) Applicant: Ruprecht-Karls-Universität Heidelberg, 69117 Heidelberg (DE)
(72) Inventor: Mokhir, Andriy Dr., 68229 Mannheim (DE); Hagen, Helen, Dipl.-Chem., 69121 Heidelberg (DE); Marzenell, Paul, Dipl.-Chem., 68526 Ladenburg (DE); Jentzsch, Elmar, Dr., 67354 Römerberg (DE); Veldwijk, Marlon, Dr., 69121 Heidelberg (DE)
(74) Representative: Müller-Boré & Partner Patentanwälte

(57) **Abstract**

The present invention relates to ferrocene-based compounds and their use as ROS (reactive oxygen species) regulating prodrugs. In particular, the present invention relates to ferrocene-based compounds which upon activation react as ROS regulating prodrugs which increase oxidative stress in cells.

## Description

The present invention relates to ferrocene-based compounds and their use as ROS (reactive oxygen species) regulating prodrugs. In particular, the present invention relates to ferrocene-based compounds which upon activation react as ROS regulating prodrugs which increase oxidative stress in cells.

Various diseases including infectious diseases caused by fungi, viruses, bacteria or protozoa, as well as endogenous diseases, like cancer, imply the need for the production of highly active pharmaceuticals.

Among these infections, malaria is one of the most devastating diseases which kills 2-3 million people and is responsible for 300-500 million clinical infections each year. There is no vaccine available to prevent infection and there is widespread resistance to anti-malarial drugs, necessitating new drug discovery and development. Malaria is caused by a protozoa in the genus *Plasmodium,* of which four species cause human malaria: *Plasmodium vivax, Plasmodium malariae, Plasmodium ovale,* and *Plasmodium falciparum.* Of the four *Plasmodium* species that cause malaria, *Plasmodium falciparum* is responsible for much of the mortality associated with the disease primarily among children, particularly in underdeveloped countries, e.g. in sub-Sarahan Africa.

Cancer is a group of diseases, which is caused by abnormalities in the genetic material of the transformed cells. One of the most successful methods of cancer treatment is chemotherapy with cytotoxic drugs that is often used in combination with surgery and radiotherapy. Cisplatin, oxaliplatin and 5-fluorouracil are representative examples of practically important anticancer drugs. These agents target rapidly dividing cells. Their cell-specificity is usually low. For example, healthy tissues with quick replacement rate (e.g. intestinal lining) and rapidly dividing normal cells (e.g. cells of hematopoietic system) are especially strongly affected.

Tumor microenvironment is different from that of normal tissues. For example, most cancer cells in both isolated form and in tissue exhibit elevated reactive oxygen species (ROS) production. ROS include ¹O₂, O₂⁻, HO· and H₂O₂. Since they function with a heightened basal level of ROS, it is known that cancer cells are more vulnerable to oxidative stress than healthy cells (B. Halliwell, Biochem. J., 2007, 401, 1-11*;* R.H. Engel et al., Frontiers Biosci., 2006, 11, 300-312; T. Finkel, Curr. Opinion Cell Biol., 2003, 15, 247-254; P.T. Schumacker, Cancer Cell, 2006, 10, 175-176). Therefore, exogenous compounds inducing ROS production can potentially be used as anticancer drugs. Examples of such compounds are arsenic trioxide, buthionine sulfoximine, procarbazine, β-phenylethyl isothiocyanate, NO-ASA and motexafin gadolinium.

It is known that stressed cells, such as, for example, human cells hosting a viral or bacterial infection and human cancer cells, call for an increased delivery of nutrients, such as iron, by presenting an increased number of receptors for nutrient carriers, such as transferrin in the case of iron. The increase in receptors for nutrient carriers in stressed cells is known to be relatively constant and orders of magnitude greater in number than in unstressed cells, which are known to show receptors intermittently and in relatively smaller numbers.

However, in the case of these ROS generating drugs, unfortunately not only cancer cells are killed, but these ROS generating drugs also cause the ROS amount in normal cells to be increased. Though the increased ROS does not kill normal cells, it can stimulate their transformation, thus potentially inducing secondary tumors as previously described (J.R. Totter, Proc. Natl. Acad. Sci. U.S.A., 1980, 77, 1763-1767; K.B. Beckman et al., J. Biol. Chem., 1997, 272, 19633-19636).

Anticancer agents regulating ROS in cells have been recently reviewed by Trachootham et al. (Nat. Rev. Drug Discovery, 2009, 8, 579-591) being summarized in Table A.

**Table A:**

| **Known redox drugs** | **Cell line** | **IC₅₀, µM** |
|---|---|---|
| **Buthionine sulfoximine (BSO)** | 8226 (Human myeloma) [1] | 2.0 |
| | WiDr (Human, colon) [1] | 450 |
| | (Human, breast) [1] | 850 |
| | different neuroblastoma cell lines [2] | 0.3 - 311 |
| **NO-ASA** | SW480 (Human, colon) [3] | 85 |
| | HT29 (Human, colon) [4] | 3-7 |
| **Imexon (Amplimexon)** | MIRW5 (melanoma) [5] | 315 (63) |
| 24 h incubation (72 h incubation) | A375 (melanoma) [5] | 54 (45) |
| (approved by FDA as an orphan drug for the treatment of ovarian cancer, metastatic malignant melanoma, multiple myeloma, and pancreatic cancer; | C8161 (melanoma) [5] | 72 (135) |
| | HEY (ovary) [5] | 180 (270) |
| | BE (ovary) [5] | 450 (270) |
| European Commission approved it as an orphan drug for the treatment of ovarian cancer) | C480 (colon) [5] | 270 (135) |
| | MCF-7 (breast) [5] | 270 (450) |
| | 8226 (myeloma) [5] | 40 (41) |
| | 8226-Dox 40 (myeloma) [5] | 40 (36) |
| | CIN8/27B (myeloma) [5] | 270 (90) |
| **Motexafin gadolinium*** | MES-SA human uterine cancer [6] | ~ 12 |
| **β-Lapachone** | Human multiple myeloma [7] | 1 |
| | HL-60 (leukemia) [8] | 1.65 |
| | HCT8 (colon) [8] | 0.83 |
| **Mangafodipir: Mn-complex**** | CT26 [9] | |

| | | |
|---|---|---|
| * not toxic in the presence of ascorbate > 333 µM; ** not toxic at > 50 µM modulates effects of oxaliplatin and 5-FU [1] Investigational New Drugs 4: 305-313, 1986 [2] Experimental Cell Research 246, 183-192, 1999 [3] PNAS 102(47), 17207-17212, 2005 [4] Biochem. Biophys. Res. Commun. 358, 1096-1101, 2007 [5] J. Nat. Cancer Inst., 84(16), 1238-1244, 1992 [6] Int. J. Radiation Oncology Biol. Phys., 51 (4), 1025-1036, 2001 [7] PNAS 100(5), 2674-2678, 2003 [8] J. Med. Chem. 53(1), 504-508, 2010 [9] J. Nat. Cancer Inst. 98, 236 - 44, 2006 | | |

These known drugs are monofunctional. In particular, they cause the increase of ROS-amount in cells either by inhibition of the cellular antioxidant system or by inducing generation of ROS. Besides these monofunctional redox drugs, pro-antioxidants, e.g. metal binding ligands, MMP inhibitors, activated by hydrogen peroxide as well as other prodrugs activated by enzymes or pH are known.

However, in many cases, the conventional (pro-)drugs suffer from their adverse side-effects, or from development of (antibiotic) resistance of the affected cells.

Thus, the problem underlying the present invention is to provide a novel class of prodrugs which should provide an efficient treatment of infection diseases as well as cancer without causing the known side-effects in conventional therapeutics, and which at the same time should be prepared in a sufficient quantity and at low cost.

The solution to the above technical problem is achieved by the embodiments characterized in the claims.

In particular, the present invention relates to a ferrocene-based compound of Formula (I): 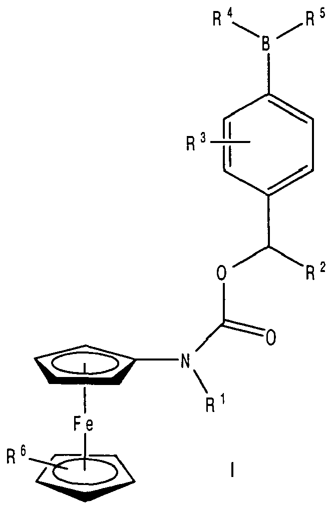 wherein R¹ represents H, a substituted or unsubstituted alkyl, a substituted or unsubstituted cycloalkyl, a substituted or unsubstituted aryl, a substituted or unsubstituted heteroaryl, a substituted or unsubstituted heteroalkyl, a substituted or unsubstituted cyclic heteroalkyl, a substituted or unsubstituted aralkyl, a sterine, a mono- or oligosaccharide;
R² is selected from the group consisting of H, alkoxy, alkyloxy, an acyl group, COOR⁷, or CONR⁸R⁹, wherein R⁷, R⁸ and R⁹ each independently represent H, a C₁-C₁₂ alkyl, a substituted or unsubstituted cycloalkyl, a substituted or unsubstituted aryl, a substituted or unsubstituted heteroaryl;
R³ is selected from the group consisting of H, alkyl group, aryl group, hetaryl group, a halogen atom, NO₂, CN;
R⁴ and R⁵ independently represent a substituted or unsubstituted alkoxy group, wherein R⁴ and R⁵ together may form a 5 to 7 membered ring; and
R⁶ is selected from the group consisting of H, alkoxy, alkyloxy, an acyl group, COOR¹⁰, or CONR¹¹R¹², wherein R¹⁰, R¹¹ and R¹² each independently represent H, a C₁-C₁₂ alkyl, a substituted or unsubstituted cycloalkyl, a substituted or unsubstituted aryl, a substituted or unsubstituted heteroaryl; wherein the ferrocene-based compound of Formula (I) having R¹, R², R³, R⁶ = H is not encompassed.

The following are definitions of terms used in this specification and the claims. The initial definition provided for a group or term herein applies to that group or term throughout the specification and claims, individually or as part of another group, unless otherwise indicated.

The term "alkyl" refers to straight or branched chain hydrocarbon groups having preferably 1 to 12 carbon atoms, more preferred 1 to 8 carbon atoms, and most preferred 1 to 6 carbon atoms, such as methyl, ethyl, propyl, isopropyl, butyl, methylpropyl, neopentyl, pentyl, ethylpropyl, dimethylpropyl, methylbutyl, hexyl, methylpentyl, dimethylbutyl, ethylbutyl, trimethylpropyl.

The term "substituted alkyl" refers to an alkyl group as defined above having one, two, three or more substituents selected from the group consisting of halo (e.g. trifluoromethyl), alkenyl, substituted alkenyl, alkynyl, nitro, cyano, oxo (=O), ORₐ, SRₐ, (=S), -NRₐR_{b}, -N(alkyl)₃⁺, -NRₐSO₂, -NRₐSO₂R_{c}, -SO₂R_{c}, -SO₂NRₐR_{b}, -SO₂NRₐC(=O)R_{b}, SO₃H, -PO(OH)₂, -C(=O)Rₐ, -CO₂Rₐ, -C(=O)NRₐR_{b}, -C(=O) (C₁₋₄alkylene)NRₐR_{b}, -C(=O)NRₐ(SO₂)R_{b}, -CO₂(C₁₋₄alkylene)NRₐR_{b}, -NRₐC(=O)R_{b}, -NRₐCO₂R_{b}, -NRₐ(C₁₋₄alkylene)CO₂R_{b}, =N-OH, =N-O-alkyl, aryl, cycloalkyl, heterocyclo, and/or heteroaryl, wherein Rₐ and R_{b} are selected from hydrogen, alkyl, alkenyl, CO₂H, CO₂(alkyl), C₃₋₇cycloalkyl, phenyl, benzyl, phenylethyl, naphthyl, a four to seven membered heterocylo, or a five to six membered heteroaryl, or when attached to the same nitrogen atom may join to form a heterocyclo or heteroaryl, and R_{c} is selected from same groups as Rₐ and R_{b}, but is not hydrogen.

The term "alkoxy" refers to a -OR group wherein R represents an alkyl group or a substituted alkyl group as defined above.

When the term "alkyl" is used together with another group, such as in "aralkyl", this conjunction specifically defines one of the substituents that the substituted alkyl contains. For example, "aralkyl" refers to a substituted alkyl group as defined above where at least one of the substituents is an aryl, such as benzyl. The term "haloalkyl" means a substituted alkyl having one or more halo substituents. For example, "haloalkyl" includes mono, bi, and trifluoromethyl.

The term "cycloalkyl" includes such rings having for example zero, one, two, or three substituents selected from the group of substituents as given hereinabove for substituted alkyl groups. The term "cycloalkyl" also includes such rings having a second ring fused thereto (e.g., including benzo, heterocyclo, or heteroaryl rings) or having a carbon-carbon bridge of 3 to 4 carbon atoms. Accordingly, the term "cycloalkyl" includes cyclopropyl, cyclobutyl, cyclopentyl, cyclohexyl, cycloheptyl, and cyclooctyl.

The term "halo" or "halogen" refers to chloro, bromo, fluoro and iodo.

The term "haloalkoxy" means an alkoxy group having for example one or more halo substituents. For example, "haloalkoxy" includes OCF₃.

The term "aryl" refers to moieties having an aromatic ring, such as phenyl, biphenyl, 1-naphthyl or 2-naphthyl. The term "aryl" includes such rings having for example zero, one, two, three or more substituents selected from the group as defined above for substituted alkyl groups. A preferred aryl group is optionally-substituted phenyl.

The terms "heterocyclo" or "heterocyclic" preferably refers to substituted and unsubstituted non-aromatic 3 to 7 membered monocyclic groups, 7 to 11 membered bicyclic groups, and 10 to 15 membered tricyclic groups, in which at least one of the rings has at least one heteroatom (O, S or N). Each ring of the heterocyclo group containing a heteroatom can contain one or two oxygen or sulfur atoms and/or from one to four nitrogen atoms provided that the total number of heteroatoms in each ring is four or less, and further provided that the ring contains at least one carbon atom. The fused rings completing bicyclic and tricyclic groups may contain only carbon atoms and may be saturated, partially saturated, or unsaturated. The nitrogen and sulfur atoms may optionally be oxidized and the nitrogen atoms may optionally be quaternized. The heterocyclo group may be attached at any available nitrogen or carbon atom. Exemplary monocyclic groups include azetidinyl, pyrrolidinyl, oxetanyl, imidazolinyl, oxazolidinyl, isoxazolinyl, thiazolidinyl, isothiazolidinyl, tetrahydrofuranyl, piperidyl, piperazinyl, 2-oxopiperazinyl, 2-oxopiperidyl, 2-oxopyrrolodinyl, 2-oxoazepinyl, azepinyl, 4-piperidonyl, tetrahydropyranyl, morpholinyl, thiamorpholinyl, thiamorpholinyl sulfoxide, thiamorpholinyl sulfone, 1,3-dioxolane and the like.

The present invention also relates to a ROS regulating prodrug comprising a compound according to Formula (I) as defined above, wherein the ROS regulating prodrug is activated, for example upon oxidation.

The present invention further provides a pharmaceutical composition containing the above-defined ROS regulating prodrug for the treatment of an infectious disease or cancer.

According to the present invention the aforementioned drawbacks of conventional prodrugs have been overcome by the above-characterized compounds exhibiting a combination of beneficial/synergistic effects. In particular, according to the present invention it has been surprisingly found that upon activation, the ferrocene-based compound of Formula (I) (hereinafter simply referred to as ferrocene-based compound I) is converted via the intermediate compound 2 into toxic component 6, and toxic component 3, a quinone methide derivative, as shown in Scheme 1.

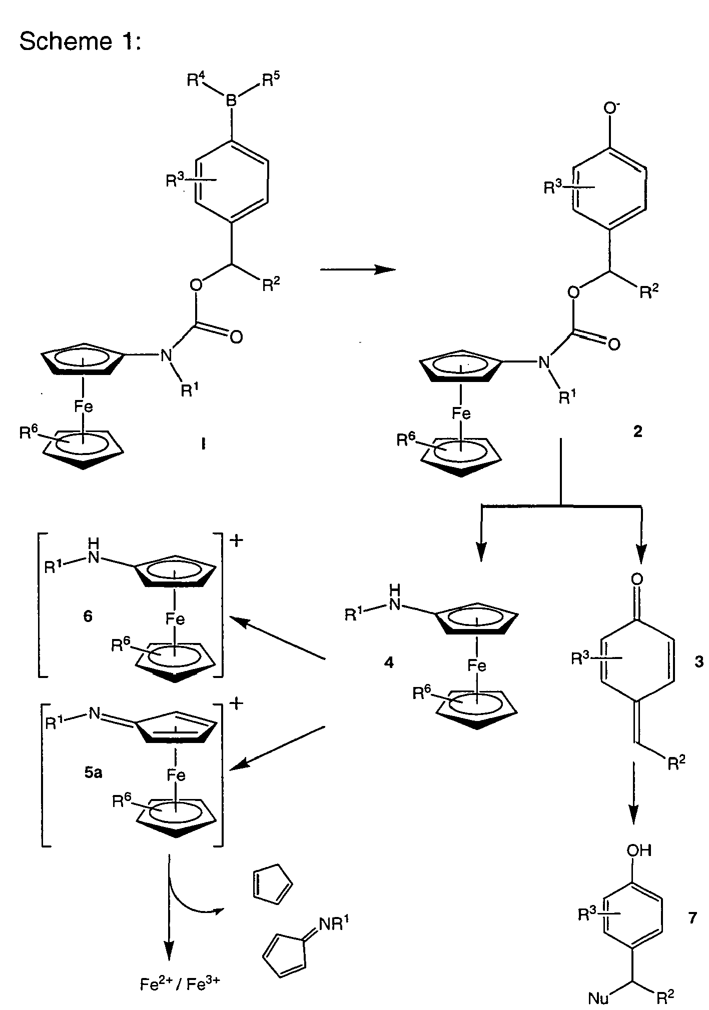

The activation of the ferrocene-based compound I preferably occurs as an oxidation, particularly with hydrogen peroxide. In a preferred embodiment, the activation occurs at a H₂O₂ concentration of > 10 µM, preferably > 20 µM, more preferred at a H₂O₂ concentration of 100 µM. H₂O₂ concentrations in the range of 1-100 µM are found in the microenvironment of cancer cells.

Upon activation the ferrocene-based compound **I** is transferred into the component **2** which spontaneously decomposes. According to a preferred embodiment, activation of ferrocene-based compound **I** occurs as oxidation, wherein oxidation by hydrogen peroxide is most preferred. According to the present invention the activation of ferrocene-based compound **I** preferably occurs in the vicinity of cancer cells and infected cells, respectively.

Component **2** undergoes 1,6-elimination with formation of quinone methide derivative **3** and aminoferrocene **4.** In a preferred embodiment, component **2** decomposes in a pH range of 6 to 9, more preferred at a pH of about 7.5. In the absence of more strong nucleophiles compound **3** reacts with water producing stable intermediate **7,** as confirmed by reverse phase thin layer chromatography. In the cell, compound **3** reacts with the more nucleophilic glutathione (GSH), thereby suppressing the antioxidative defence system of the cell (Nu in compound **7** shown in Scheme 1 represents as "NuH": H₂O, GSH).

According to the present invention aminoferrocene compound **4** upon further activation with, for example, either hydrogen peroxide or molecular oxygen spontaneously decomposes via intermediate **5a** forming iron ions in the case of R¹ = H. On the other hand, in the case of R¹ ≠ H, the aminoferrocene compound **4** is transformed towards ferrocenium ion **6** which is formed as the result of one electron oxidation of the aminoferrocene **4.** The ferrocenium ion **6** is known to be highly toxic as well as highly reactive ROS generating species.

Iron ions or ferrocenium ions generate ROS catalytically, whereas the quinone methide derivative suppresses the antioxidative defence system of the cell by alkylation of glutathione. These combined/synergistic effects of both the catalytic induction of ROS production by ROS generating species, i.e. iron ions and ferrocenium ion **6,** and suppression of the antioxidant system induce quick increase of ROS concentration in the cells beyond the apoptotic level. The natural defense mechanism of, for example, cancer cells is too slow to react to this massive increase of ROS amounts. Said simultaneous impairment of stressed cells renders the ferrocene-based compound **I** according to the present invention highly active ROS regulating prodrugs, especially more active as known monofunctional redox drugs.

According to the present invention R⁴ and R⁵ in Formula (I) of the ferrocene-based compound *I* independently represent a substituted or unsubstituted alkoxy group, wherein R⁴ and R⁵ together may form a 5 to 7 membered ring, thereby forming together with B a boronic ester moiety. In a preferred embodiment R⁴ and R⁵ are independently selected from the group consisting of methoxy, ethoxy, propoxy and isopropoxy. According to the present invention R⁴ and R⁵ may be linked forming a 5 to 7 membered ring. In the case that R⁴ and R⁵ are linked, it is preferred that R⁴ and R⁵ form a group selected from - OCH₂CH₂O-, -OCH₂CH₂CH₂O-, -OC(Me)₂C(Me)₂O-, -OCH₂CH₂OCH₂CH₂O-, and -OCH₂C(Me)₂CH₂O-. In other words, it is preferred that the thus formed boronic ester moiety is selected from the group consisting of dimethoxy ester, diethoxy ester, dipropoxy ester, diisopropoxy ester, dimethylene glycol ester, trimethylene glycol ester, diethylen glycol ester, pinacol ester, and neopentyl glycol ester. Particularly preferred is pinacol ester, i.e. R⁴ and R⁵ form together with B a boronic acid pinacol ester moiety.

The boronic ester moiety in the ferrocene-based compound I according to the present invention is cleaved off upon activation, such as oxidation, forming intermediate compound **2.** Preferably, the boronic ester moiety is cleaved off upon oxidation by hydrogen peroxide. In this context, the B-C bond in the ferrocene-based compound **I** is cleaved leading to the intermediate compound **2.**

According to the present invention, R¹ in Formula (I) is preferably selected from the group consisting of linear or branched C₁-C₁₂ alkyl, a substituted or unsubstituted benzyl, a substituted or unsubstituted aryl, a sterine, a mono- or oligosaccharide, wherein the substituent represents the above-defined substituents for an alkyl group. According to a preferred embodiment the substituent is selected from the group consisting of a heteroalkyl group, and saturated, partially saturated or unsaturated cyclic heteroalkyl group. Not limiting examples of such heterocycles are aziridine, azirine, oxirane, dioxirane, diazirine, dioxetane, azetidine, pyrrolidine, pyrrole, oxalane, furan, thiolane, thiophene, imidazolidine, imidazole, imidazoline, pyrazolidine, pyrazole, pyrazoline, oxazolidine, oxazole, oxazoline, isooxazolidine, isoxazole, isoxazoline, thiazolidine, thiazole, thiazoline, isothiazolidine, isothiazole, isothiazoline, dioxolane, triazole, oxadiazole, tetrazole, piperidine, pyridine, morpholine, piperazine, diazine, oxazine, dioxane, dioxin, and heterocycles having one or more fused ring(s), such as benzimidazole, indole, quinoline, and the like.

According to the present invention, it is more preferred that R¹ is a hydrophobic residue to improve cell-permeability of ferrocene-based compound **I** as explained in more detail hereinafter. In addition, it is also preferred that R¹ represents residues exhibiting a controlling effect in delivering the ferrocene-based compound **I** to specific locations in the cell (i.e. "targeting"), where selective ROS effect can be especially damaging, i.e. to the nucleus of the target genomic DNA. Non-limiting examples of these residues are sterines and mono- or oligosaccharides. Particularly preferred for R¹ in Formula (I) are the following moieties:

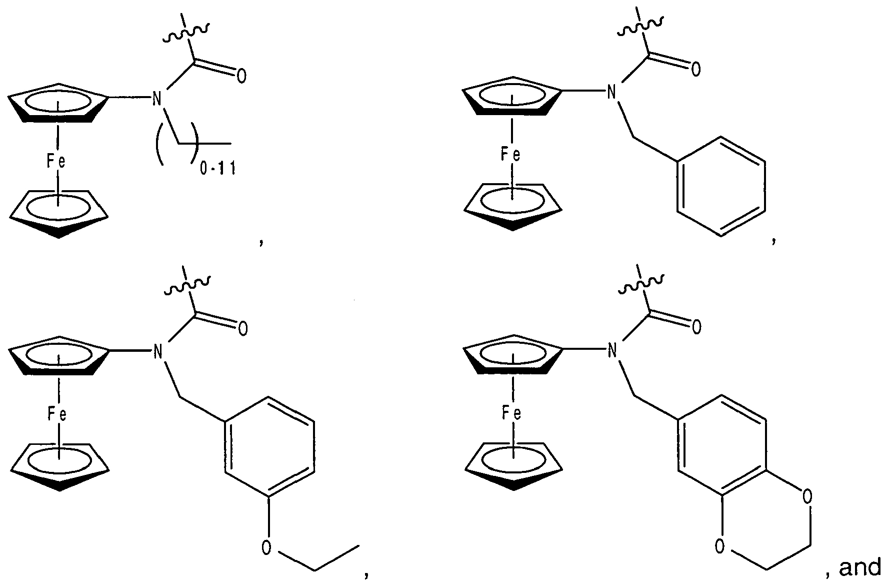

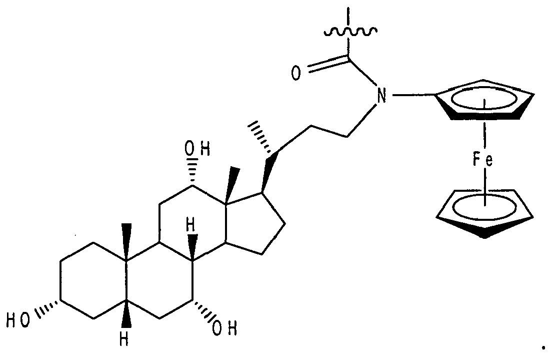

According to the present invention it is preferred that R¹ in Formula (I) is not a hydrogen atom, but a residue which improves cell-permeability as well as accumulation of the ferrocene-based compound **I** at a specific location in the sense of "targeting". In particular, hydrophobic residues, such as C₁-C₁₂ alkyl, substituted or unsubstituted benzyl, substituted or unsubstituted aryl, improve cell-permeability of the ferrocene-based compound **I** of the present invention, and thus resulting in an efficient uptake of the ferrocene-based compound **I**. On the other hand, residues such as cholic acid residues or saccharide moieties, afford targeting, i.e. a controlled delivery of the ferrocene-based compound **I** to specific locations in the cell resulting in an accumulation of the ferrocene-based compound **I**. Good cell permeability and specific accumulation behavior, respectively, of the ferrocene-based compound **I** result in an efficient ROS generation, preferably in the vicinity of the targets.

In another embodiment of the present invention, R¹ in Formula (I) is a hydrogen atom. In this embodiment, either one, two or all of R², R³ and R⁶ in Formula (I) are independently selected so as to improve cell-permeability of the ferrocene-based compound **I** as explained above, i.e. R², R³ and/or R⁶ are selected from hydrophobic residues improving cell-permeability of the ferrocene-based compound **I**.

According to the present invention, R² of the ferrocene-based compound **I** is preferably selected from the group consisting of H, alkoxy, alkyloxy, an acyl group, COOR⁷, or CONR⁸R⁹, wherein R⁷, R⁸ and R⁹ each independently represent H and C₁-C₁₂ alkyl, a substituted or unsubstituted cycloalkyl, a substituted or unsubstituted aryl, a substituted or unsubstituted heteroaryl. Similarly to the residue R¹, upon variation of residue R², cell-permeability as well as targeting of the ferrocene-based compound **I** of the present invention can be controlled.

In a preferred embodiment of the present invention, residue R³ is selected so as to further improve cell-permeability of the ferrocene-based compound **I** of the present invention. In a particularly preferred embodiment R³ is selected from the group consisting of H and CH₃.

According to the present invention, R⁶ in Formula (I) representing the ferrocene-based compound **I** is preferably selected from the group consisting of H, alkyloxy, COOR¹⁰, or CONR¹¹R¹², wherein R¹⁰, R¹¹ and R¹² each independently represent H and C₁-C₁₂ alkyl, a substituted or unsubstituted cycloalkyl, a substituted or unsubstituted aryl, a substituted or unsubstituted heteroaryl. In accordance to residue R², upon variation of residue R⁶, cell-permeability as well as targeting of the ferrocene-based compound **I** of the present invention can be controlled.

The ferrocene-based compound **I** according to the present invention can be prepared by any methods known to a person skilled in the art, exemplified in the Examples shown hereinafter. Substituted or unsubstituted aminoferrocene can be prepared for example by the reaction described by K. Heinze et al. (Eur. J. Inorg. Chem. 2004, 2974-2988). In the case of R¹≠H, said substituted or unsubstituted aminoferrocene can be further substituted via reductive amination employing an aldehyde moiety, such as acetaldehyde, benzaldehyde, cholic acid aldehyde and the like. The thus generated compound may be *in situ* or after isolation further reacted with a substituted or unsubstituted phenylboronic ester moiety bearing a hydroxymethyl residue in triphosgen affording the respective ferrocene-based compound **I** according to the present invention.

Detailed studies as to e.g. kinetics, cell-permeability and cytotoxicity of ferrocene-based compound **I** have been conducted revealing the surprisingly beneficial/synergistic properties of the ferrocene-based compound I of the present invention.

Firstly, the ferrocene-based compound I according to the present invention decomposes to a great extent in the presence of an oxidative environment. For example, the ferrocene-based compound I decomposes to a great extent in the presence of more than 10 µM H₂O₂, to a greater extent in the presence of more than 20 µM H₂O₂, to an even greater extent in the presence of 100 µM H₂O₂, whereas it hardly decomposes in the presence of 0 - 5 µM H₂O₂. As a consequence, for example a H₂O₂ concentration of more than 10 µM, preferably more than 20 µM, and even more preferred 100 µM results in the activation of ferrocene-based compound **I**. Intracellular H₂O₂ concentration "[H₂O₂]ᵢₙ" in normal cells varies between 0.001 and 0.7 µM, while 1 µM is already toxic as described by J.R. Stone (Archiv. Biochem. Biophys., 2004, 422, 119-124). Therefore, since the ferrocene-based compound **I** according to the present invention is not activated, i.e. decomposed at H₂O₂ concentrations at the level of normal cells, the ferrocene-based compound **I** is stable in the microenvironment of normal cells, and thus non-toxic. Accordingly, the ferrocene-based compound **I** does not cause harmful side-effects as discussed in the case of conventional pharmaceuticals.

In contrast, for example cancer cells generate substantially more H₂O₂ and, consequently, their [H₂O₂]ᵢₙ is significantly higher, such as more than 5 µM, and in general, can be up to 10 - 100 µM. At such conditions the ferrocene-based compound **I** decomposes with formation of highly toxic compound **3,** and iron ions and ferrocenium ion **6,** respectively, as depicted in Scheme 1. Released iron ions or ferrocenium ions 6 convert H₂O₂ into highly reactive HO· radicals, being responsible for cell apoptosis and necrosis. In particular, ferrocene-based compounds of Formula (I) wherein R¹ = H generate HO· radicals almost as efficiently as FeSO₄ does. Control studies revealed that the stable aminoferrocene **1a** (used as a negative control), however, does not act as a catalyst of this reaction.

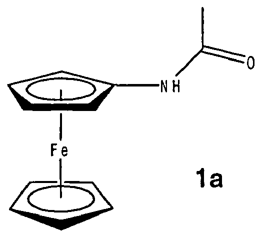

According to the present invention the ferrocene-based compound **I** releases iron ions and ferrocenium ions **6,** respectively, and induce ROS production in stressed cells. It has been surprisingly found that the ferrocene-based compound **I** exhibits an unique behavior in view of a specific oxidative environment, especially at a specific H₂O₂ concentration. For example, at low H₂O₂ concentration in normal cells, the ferrocene-based compound **I** remains intact and, therefore untoxic. In the presence of H₂O₂ concentration of more than 10 µM, preferably more than 20 µM, more preferably 100 µM, the ferrocene-based compound **I** is activated into a highly efficient ROS generating catalyst. In particular, due to the combined/synergistic effects of the decomposition products being highly toxic compound **3,** and iron ions and ferrocenium ion **6,** respectively, the amount of ROS is dramatically increased resulting in a high cytotoxicity of the ferrocene-based compound **I**.

The present invention further relates to a ROS regulating prodrug comprising the ferrocene-based compound **I.** In a preferred embodiment, the ROS regulating prodrug comprising the ferrocene-based compound I is activated with hydrogen peroxide. The term "prodrug" as used herein is not especially restricted as long as the ferrocene-based compound **I** is comprised. In particular, the term "prodrug" means any form of a drug (or compound) which is administered to an organism, such as a human, in an inactive or less active form and is converted *in vivo,* e.g. by metabolization, into the active form. Said conversion of the ROS regulating prodrug into the active form is not specifically restricted and includes any (chemical and/or physical) reaction, preferably an oxidation, of the prodrug which occurs after administration to the organism. The activation of the ROS regulating prodrug according to the present invention occurs in accordance with the reaction pathway shown in Scheme 1. The cleavage upon activation releases the highly toxic compound **3,** and iron ions and ferrocenium ion **6,** respectively, which, due to the aforementioned synergistic effect of ROS production and inhibition of the antioxidative defence system of the cell by alkylation of glutathione, efficiently generate ROS.

Another aspect of the present invention relates to a pharmaceutical composition containing the above-defined ROS regulating prodrug, and optionally a pharmaceutically acceptable carrier and/or diluent and/or adjuvant. In particular, the pharmaceutical composition may, for example, contain solvents and diluents such as sodium chloride solution or a solution containing any pharmaceutically acceptable buffer. Moreover, the pharmaceutical composition of the present invention may be in any form suitable for administration to a patient, for example in an injectable form, as a tablet or a capsule, or as a composition for inhalation.

The present invention also provides the use a pharmaceutical composition containing the above-defined ROS regulating prodrug for the treatment of an infectious disease or cancer. In particular, the pharmaceutical composition containing the above-defined ROS regulating prodrug is used for the treatment of an infectious disease wherein the stressed cells call for an increased delivery of iron. In a preferred embodiment, the pharmaceutical composition containing the above-defined ROS regulating prodrug is for use in the treatment of bacterial infected cells. According to another embodiment, the pharmaceutical composition containing the above-defined ROS regulating prodrug is for use in the treatment of malaria. In yet another embodiment, the pharmaceutical composition containing the above-defined ROS regulating prodrug is for use in the treatment of cancer.

The ferrocene-based compound **I** according to the present invention has high cytotoxicity upon activation in oxidative environment, particularly with hydrogen peroxide. The ferrocene-based compound **I** suitably acts as a prodrug. Based on its constitutional properties, the ferrocene-based compound **I** allows treatment of not only cancer-cells, but also stressed cells upon pathogen-infection, which accumulate iron ions at an elevated level when compared with normal cells. In particular, the ferrocene-based compound **I** allows treatment of malaria and bacterial infections.

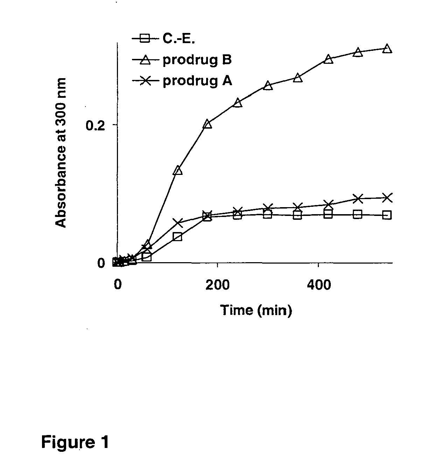

Figure 1: Iron complexes (100 µM) were dissolved in dimethylformamide and concentrated H₂O₂ solution (30 % in water, 1 µL) was added: final H₂O₂ concentration was 9.8 mM. Light absorbance at 300 nm was monitored as a function of time.

The present invention will be further described in more detail with reference to examples. However, it should be understood that the present invention is by no means limited to such specific examples.

### Examples

### Experimental:

Commercially available chemicals of the best quality from Aldrich/Sigma/Fluka (Germany) were obtained and used without purification. NMR spectra were acquired on Bruker Avance DRX 200, Bruker Avance II 400 or Bruker Avance III 600 spectrometers. ESI mass spectra were recorded on an ESI Q-tof Ultima API mass spectrometer (Waters / Micromass), FAB mass spectra - on a Jeol JMS-700 instrument using p-nitrobenzylalcohol as a matrix and EI mass spectra - on a Finnigan MAT 8200 instrument. IR spectra were recorded on a Biorad Excalibur FTS 3000 instrument. The samples were prepared as KBr pellets. Cyclic voltamperometry was conducted on an EG@G 262A potentiostat / galvanometer. C, H, N analysis was performed in the microanalytical laboratory of chemical institutes of the University of Heidelberg. UV/Vis spectra were measured on a Varian Cary 100 Bio UV/Vis spectrophotometer by using 1 cm optical path black-wall absorption semi-microcuvettes (Hellma GmbH, Germany) with a sample volume of 0.7 mL. Fluorescence spectra were acquired on a Varian Cary Eclipse fluorescence spectrophotometer by using black-wall fluorescence semimicrocuvettes (Hellma GmbH, Germany) with a sample volume of 0.7 mL. The fluorescence of live HL-60 cells was quantified by using an Accuri C6 Flow cytometer. The data were processed by using the CFLow Plus (Accuri) software package.

### Synthesis

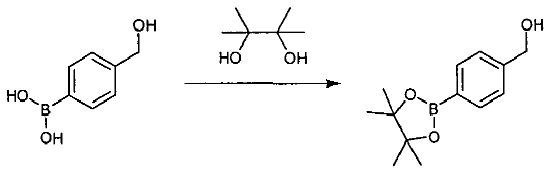

### 4-(Hydroxymethyl)phenylboronic acid pinacol ester:

A suspension of 4-(hydroxymethyl)phenylboronic acid (1.00 g, 6.6. mmol) and pinacol (0.79 g, 6.7 mmol) in tetrahydrofurane (40 mL) was refluxed over 22 h. During this time the starting materials were completely dissolved. The solvent was removed in vacuum (10 mbar), the residue redissolved in CH₂Cl₂ / EtOAc and purified by column chromatography on silica gel using the mixture of CH₂Cl₂ / EtOAc (9/1, v/v) as eluent. Yield 1.4 g (92%). R_{f}= 0.3 (silica, eluent - CH₂Cl₂ / EtOAc, 9/1, v/v). ¹H NMR (200 MHz, CDCl₃), δ in ppm: 1.35 (s, 12H), 4.71 (s, 2H), 7.37 (d, 2H, ³J = 8.2 Hz), 7.81 (d, 2H, ³J = 8.2 Hz).

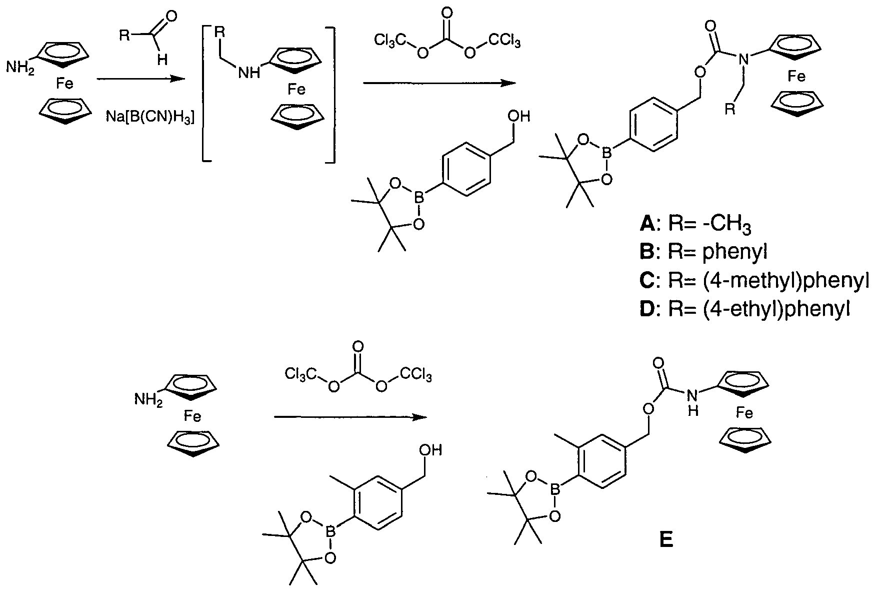

### 4-((N-Ethyl-N-Ferrocenylaminocarbonyl)oxymethyl)-2-phenylboronic acid pinacol ester (prodrug A):

Aminoferrocene (0.40 g, 1.98 mmol) and acetaldehyde (0.1 mL, 1.98 mmol) were dissolved on methanol (10 mL) and refluxed for 2 h. Then, Na[B(CN)H₃] (0.12 g, 1.98 mmol) dissolved in MeOH (10 mL) was slowly added. The mixture obtained was acidified with HCl (2 mL, 1 M in water) and left stirring for 30 min. Afterwards, the solvent was removed in vacuum (0.01 mbar) and the rest was mixed with triphosgene (0.59 g, 1.98 mmol) in toluene (25 mL). The suspension obtained was refluxed for 1 h, cooled down to 22°C and then mixed with solution of 4-(hydroxymethyl)phenylboronic acid pinacol ester (0.46 g, 1.98 mmol) in toluene (10 mL). The resulting solution was heated to 120°C and stirred at these conditions for 6 h. Then, the solvent was removed in vacuum (0.01 mbar) and the crude product was purified by column chromatography on silica gel using hexane containing 5% of acetone as eluent. Yield 0.20 g (20%). R_{f}= 0.5 (silica, eluent - hexane / acetone, 5/1, v/v). ¹H NMR (400 MHz, acetone-d⁶), δ in ppm: 1.27 (t, 3H), 1.33 (s, 12H), 3.77 (q, 2H), 4.00 (s, 2H), 4.13 (s, 5H), 4.53 (m, 2H), 5.22 (s, 2H), 7.46 (d, 1 H), 7.77 (d, 2H). ¹³C NMR (100.55 MHz, acetone-d⁶), δ in ppm: 14.4, 25.3, 45.8, 62.8, 65.1, 66.9, 67.5, 69.8, 84.6, 127.8, 128.1, 135.7 (two overlapping peaks), 139.1, 141.2. FAB MS: calculated for C₂₆H₃₂BNO₄Fe 489.2, found 489.2 m/z. C, H, N analysis: calculated for C₂₆H₃₂BNO₄Fe - C 63.8%; H 6.6%; N 2.9%; found - C 63.8%; H 6.8%; N 2.9%. IR spectra (in KBr), wave number in cm⁻¹: 3101, 2973, 1696, 1623.

### 4-((N-benzyl-N-Ferrocenylaminocarbonyl)oxymethyl)-2-phenylboronic acid pinacol ester (prodrug B)

Compound **B** was obtained analogously to **A** except that benzaldehyde (0.2 mL, 1.98 mmol) was used in place of acetaldehyde. Yield 60 mg (5%). R_{f}= 0.4 (silica, eluent - hexane / acetone, 5/1, v/v). ¹H NMR (400 MHz, acetone-d⁶), δ in ppm: 1.33 (s, 12H), 3.97 (s, 2H), 4.11 (s, 5H), 4.45 (s, 2H), 5.02 (s, 2H), 5.52 (s, 2H), 7.34 (m, 7H), 7.72 (m, 2H). ¹³C NMR (100.55 MHz, acetone-d⁶), δ in ppm: 25.3, 53.9, 63.4, 65.1, 67.6, 67.9, 69.8, 84.6, 127.3 (two overlapping peaks), 127.8, 127.9, 129.4, 135.7, 140.0, 141.0, 142.5. EI MS: calculated for C₃₁H₃₄BNO₄Fe 551.2, found 551.2 m/z. C, H, N analysis: calculated for C₃₁H₃₄BNO₄Fe - C 67.5%; H 6.2%; N 2.5%; found - C 67.4%; H 6.5%; N 2.5%. IR spectra (in KBr), wave number in cm⁻¹: 3070, 2973, 1700, 1623.

### 4-((N-(4-methylbenzyl)-N-Ferrocenylaminocarbonyl)oxymethyl)-2-phenylboronic acid pinacol ester (prodrug C)

Compound **C** was obtained analogously to **A** except that 4-methylbenzaldehyde (0.24 g, 1.98 mmol) was used in place of acetaldehyde. Yield 22 mg (2 %). R_{f}= 0.50 (silica, eluent - hexane / acetone, 3 / 1, v/v). ¹H NMR (400 MHz, acetone-d⁶), δ in ppm: 1.33 (s, 12H), 2.31 (s, 3H), 3.97 (s, 2H), 4.11 (s, 5H), 4.46 (s, 2H), 4.96 (s, 2H), 5.24 (s, 2H), 7.18 (dd, 4H), 7.38 (m, 2H), 7.73 (d, 2H). ¹³C NMR (100.55 MHz, acetone-d⁶), δ in ppm: 21.14, 25.27, 53.88, 63.27, 65.09, 67.84, 69.81, 84.64, 127.35, 129.99 (two overlapping signals), 135.66 (two overlapping signals), 136.89, 137.20, 141.00. FAB MS: calculated for C₃₂H₃₆BNO₄Fe 565.2, found 565.6 m/z. IR spectra (in KBr), wave number in cm⁻¹: 3093, 2955, 2924, 2855, 1705, 1620.

### 4-((N-(4-ethylbenzyl)-N-Ferrocenylaminocarbonyl)oxymethyl)-2-phenylboronic acid pinacol ester (prodrug D)

Compound **D** was obtained analogously to **A** except that amounts of all reagents were scaled down twice and 4-ethyl-benzaldehyde (0.14 mL, 1 mmol) was used in place of acetaldehyde. Yield 39 mg (7 %). R_{f}= 0.51 (silica, eluent - hexane / acetone, 3 / 1, v/v). ¹H NMR (400 MHz, acetone-d⁶), δ in ppm: 7.74 (d, 2H), 7.38 (d, 2H), 7.20 (m, 4H), 5.24 (s, 2H), 4.97 (s, 2H), 4.45 (s, 2H), 4.11 (s, 5H), 3.96 (s, 2H), 2.62 (q, 2H), 1.33 (s, 12H), 1.21 (t, 3H). ¹³C NMR (100.55 MHz, acetone-d⁶), δ in ppm: 143.71, 140.97, 137.12, 135.65, 128.88, 128.81 (two overlapping peaks), 128.01, 127.83, 127.41, 84.62, 69.78, 67.84, 67.59, 65.07, 63.27, 53.86, 29.13, 25.27, 16.24. FAB MS: calculated for C₃₃H₃₈BNO₄Fe 579.2, found 579.6 m/z..IR spectra (in KBr), wave number in cm⁻¹: 3093, 2955, 2924, 2855, 1705, 1620.

### 4-((N-Ferrocenylaminocarbonyl)oxymethyl)-2-methylphenylboronic acid pinacol ester (prodrug E)

Triphosgene (1.61 g, 5,44 mmol) and aminoferrocen (1.09 g, 5.44 mmol) were added to toluene (98 mL) and purged with argon. The mixture was heated up to 120 °C and kept at this temperature until all starting materials were dissolved (~30 min). The solution obtained was cooled down to 22 °C and 4-(hydroxymethyl)-2-methylphenylboronic acid pinacol ester (1.35 g, 5.44 mmol) dissolved in CH₂Cl₂ (132 mL) was added dropwise. The solution was left stirring at 22 °C for 44 h. Then, the solvent was removed in vacuum (10 mbar) and the product was purified by column chromatography on silica gel using hexane / EtOAc (10/2, v/v) as eluent. Yield 0.83 g (32 %). R_{f}= 0.33 (silica, eluent - CH₂Cl₂ / EtOAc, 7/2, v/v). ¹H NMR (200 MHz, acetone-d⁶), δ in ppm: 7.72 (d, 1 H), 7.21 (m, 2H), 5.12 (s, 2H), 4.56 (s, 2H), 4.11 (s, 5H), 3.93 (s, 2H), 2.52 (t, 3H),1.34 (s, 12H). ¹³C NMR (100.55 MHz, acetone-d⁶), δ in ppm: 145.8, 141.0, 137.0, 129.7, 124.7, 84.3, 69.8, 66.5, 64.7, 61.1, 25.3, 22.5. FAB MS: calculated for C₂₅H₃₀BFeNO₄ 475.2, found 475.2 m/z. C, H, N analysis: calculated for C₂₅H₃₀BFeNO₄ - C 63.2 %; H 6.4 %; N 3.0 %; found - C 63.3 %; H 6.6 %; N2.9%.

For the following *in vitro* and *in vivo* assays, prodrugs A, B, C, D and E were compared with Comparative Example which represents a ferrocene-based compound of Formula (I) wherein R¹, R², R³, R⁶ = H. In addition, compound P was used as a positive control.

| Comparative Example (C.-E.) | Negative control (1 a) | Positive control (P): |
|---|---|---|
| 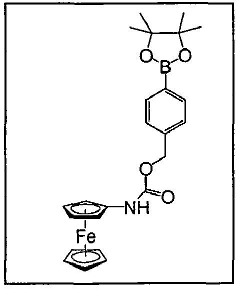 | 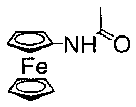 | 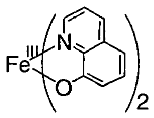 |

### In vitro assays

### Monitoring release of iron ions from the prodrugs A-E, Comparative Example and control compounds in the presence of hydrogen peroxide (Table 1):

Solution of a ferrocene complex (10 µL, 10 mM in DMF containing 2% water and 1% sodium ascorbate) was diluted with MOPS buffer (990 µL, 100 mM, pH 7.5). Such probes were incubated with H₂O₂ (1 mM) at 22°C for 100 min. Then the reaction was quenched by adding sodium dithionite (20 µL, 1 M in water) that converts Fe³⁺ into Fe²⁺. Finally, 2,2'-bipyridine solution (3 µL, 100 mM in DMF) was added to form dark red [Fe(2,2'-bipyridine)₃]²⁺ complex (λₘₐₓ= 519 nm). FeSO₄ sulfate (100 µM) was used as a positive control to determine the absorbance intensity when the ferrocene complexes were completely converted by H₂O₂ to free Fe²⁺. Table 2 shows the efficacy of iron release from a prodrug in the presence of H₂O₂. The data are provided in Table 2 and were determined by using the following formulae: iron release efficacy = (A₅₁₉ₙₘ(prodrug) - A₅₁₉ₙₘ(buffer)) / (A₅₁₉ₙₘ(FeSO₄) - A₅₁₉ₙₘ(buffer)), where A₅₁₉ₙₘ(prodrug) is absorbance at 519 nm of a prodrug treated with H₂O₂ and 2,2'-bipyridine as described above, A₅₁₉ₙₘ(FeSO₄) is absorbance at 519 nm of FeSO₄ treated in a similar way as a prodrug and A₅₁₉ₙₘ(buffer) is absorbance at 519 nm of the buffer only treated in a similar way as a prodrug.

### Monitoring generation of ROS in the presence of the prodrugs A-E, Comparative Example and control compounds (Table 1):

2',7'-Dichlorfluorescin diacetate (DCFH-DA, 4.9 mg) was dissolved in DMF (100 µL) and mixed with aqueous NaOH (0.1 M, 900 µL). The resulting mixture was incubated for 30 min at 22°C in the dark to obtain the stock solution of 2',7'-dichlorfluorescin (DCFH, 10 mM). Next, the solution (1 mL) containing DCFH (10 µM), MOPS buffer (100 mM, pH 7.5), EDTA (10 mM), glutathione (5 mM) and H₂O₂ (10 mM) was prepared. Monitoring of fluorescence (λₑₓ= 501 nm, λₑₘ= 531 nm) of this solution was started. After 3 min, an iron complex (100 µM: ferrocene prodrugs **A-E,** Comparative Example, negative or positive controls **1 a, P**) was added and the fluorescence monitoring was continued. Efficacy of ROS generation was then determined 17 and 37 min after the addition of the iron complex by using the following formulae: efficacy = (F(prodrug) - F₀) / (F(FeSO₄) - F₀), where F(prodrug) is fluorescence of a mixture containing prodrug and treated as described above, F(FeSO₄) is fluorescence of a mixture containing FeSO₄; F₀ is fluorescence of a mixture containing no iron complex.

**Table 1**

| Compound | Efficacy of iron release in vitro | Efficacy of ROS generation in vitro | |
|---|---|---|---|
| | | 17 min incubation | 37 min incubation |
| Prodrug A | 0.72 | 0.50 | |
| Prodrug B | 0.09 | 0.24 | 0.53 |
| Prodrug C | 0 | 0.10 | 0.42 |
| Prodrug D | 0 | 0.09 | 0.24 |
| Prodrug E | 0.74 | 0.52 | |
| Comparative example C.-E. | 0.95 | 0.56 | |
| Positive Control P | 1 | 1 | |
| Negative Control 1 a | 0 | 0.04 | |

### Monitoring formation of ferrocenium ions from the prodrugs A and B, as well as comparative example C.-E

Formation of ferrocenium ions from ferrocenes correlates with the increased light absorption in the region between 250 and 350 nm. In this spectral region ferrocene derivatives have intense charge transfer transitions, whereas ferrocenes have only weak transitions (Y.S. Sohn, D.N. Hendrickson, H.B. Grey, J. Am. Chem. Soc., 1971, 93(15), 3603 - 3612). We observed that prodrugs **B-D** and to a lesser extent prodrug **A** generate ferrocenium ions in the presence of H₂O₂, whereas prodrug **E** and comparative example **C.-E.** are rather decomposed with formation of iron ions (Tables 1, Figure 1).

### Cellular assays

### Assay for determination of cell Permeability of the prodrugs (Table 2) (according to the protocol described in J.Plant Nutr. Soil Sci. 1999,162,15-18)

HL60-cells grown in RPMI 1640 medium supplemented with 10 % FCS, 1 % glutamine and 1% penicillin / streptomycin were centrifuged and the medium was replaced with RPMI 1640 medium (5 % FCS, 1 % L-glutamine, 1% penicillin) to obtain suspensions containing 10⁶ cells per mL. Solutions of prodrugs (5 µL, solvent: DMF containing 2 % water and 1 % sodium ascorbate) were added to the suspensions (500 µL) and incubated for 1 h. The final concentration of the prodrugs in the suspensions was 100 µM. Then the cells were washed 3 times with PBS buffer (3 x 500 µL), treated with concentrated H₂O₂ solution (200 µL, 1 M) for 30 min and all volatiles were removed by lyophilization. Dry, lysed cells were washed with water (200 µL) and aqueous solution obtained was acidified with HCl (400 µL, 0.1 M). Then this solution was extracted with ethyl-1,3-hexandiol (100 µL, 10 % in CHCl₃, v/v) and a portion of the organic phase obtained (40 µL) was mixed with H₂SO₄ / CH₃CO₂H (400 µL, 1/1, v/v). Curcumin solution in methylisobutylketone (500 µL, 2 mg in 1 mL of the solvent) was added and allowed to react for 24 h. The reaction was quenched by addition of water (1 mL). Light absorbances at 550 and 780 nm of the organic phase were measured. The value A(550 nm)-A(780 nm) was proportional to concentration of boron in the mixture. Amount of boron released from comparative example C.-E. was taken as a reference. All other values were determined relative to this reference. These values are compared in Table 2 with TLC retention factors, which are proportional to hydrophobicity of the prodrugs.

**Table 2**

| Compound | Relative efficiency of cell loading | TLC-retention factor (R_{f})*ⁱ* |
|---|---|---|
| Prodrug A | 3.1 | 0.47 |
| Prodrug B | 1.8 | 0.46 |
| Prodrug C | 1.5 | 0.50 |
| Prodrug D | 2.3 | 0.51 |
| Prodrug E | 1.3 | 0.45 |
| Comparative example C.-E. | 1 | 0.38 |

| | | |
|---|---|---|
| *ⁱ*TLC: thin layer chromatography, support - SiO₂, eluent - hexane / ethyl acetate (3/1, v/v) | | |

### Release of chelatable iron ions from comparative example C.-E. and controls in live HL-60 cells (Table 3):

The probe of HL-60 cells was taken from the cultivation medium (RPMI 1640 supplemented with 10% FCS, 1% L-glutamine and 1% penicillin). The medium was replaced for PBS-buffer to obtain the cell suspension with 10⁶ cells per mL. Calcein AM solution (Invitrogen, C3100MP, 2 µL, 50 µM in DMSO) was added to the cell suspension (1 mL) and incubated in the dark chamber filled with CO₂ (5%) at 37°C for 15 min. Then, the cells were washed with PBS and RPMI 1640 (5% FCS, 1% L-glutamine, 1% penicillin) medium and an iron complex (10 µL of stock solutions, solvent: DMF containing 2% water and 1% sodium ascorbate, final concentration of the complex - 50 µM) was added. After 4 h of the incubation the fluorescence of cells (λₑₓ = 488 nm, λₑₘ = 530 nm) in the suspensions was determined by using the flow cytometer. Calcein AM is activated in cell by hydrolysis and binds chelatable iron ions. In the result fluorescence of the dye is quenched. Efficacy of iron release from a prodrug in HL-60 cells was determined by using the following formulae: iron release efficacy = (F₀ - F(prodrug)) / (F₀ - F(control **P**)), where F(prodrug) is fluorescence of cells treated with a prodrug, F(control **P**) is fluorescence of cells treated with control **P** and F₀ is fluorescence of cells, which were not treated with any iron complex.

### Generation of ROS in HL-60 cells in the presence the prodrugs, comparative example C.-E. and controls (Table 3)

The probe of HL-60 cells was taken from the cultivation medium (RPMI 1640 supplemented with 10 % FCS, 1 % L-glutamine and 1% penicillin). The medium was replaced for PBS-buffer to obtain the cell suspension with 10⁶ cells per mL. DCFH-DA solution (1 µL, 10 mM in DMSO) was added to the suspension (1 mL) and incubated in the dark chamber filled with CO₂ (5 %) at 37 °C for 5 min. Then, the cells were washed with PBS and RPMI 1640 (5 % FCS, 1 % L-glutamine, 1% penicillin) medium and an iron complex (10 µL of stock solutions, solvent: DMF containing 2 % water and 1 % sodium ascorbate, final concentration of the complex - 50 µM) was added. After 4 h of the incubation the fluorescence of live cells (λₑₓ = 488 nm, λₑₘ = 530 nm) in the suspensions was determined by using the flow cytometer. Efficacy of ROS generation was determined using the following formulae: efficacy = (F(prodrug) - F₀) / (F(FeSO₄) - F₀), where F(prodrug) is mean fluorescence intensity of cells incubated with a prodrug and treated as described above, F(FeSO₄) is mean fluorescence intensity of cells incubated with FeSO₄; F₀ is mean fluorescence intensity of cells, which were not treated with any iron complex.

**Table 3**

| Compound | Efficacy of iron release in cells | Efficacy of ROS release in cells |
|---|---|---|
| Prodrug A | - | 0.06 ± 0.03 |
| Prodrug B | - | 0.09 ± 0.02 |
| Prodrug D | - | 0.03 ± 0.02 |
| Prodrug E | - | 0.04 ± 0.02 |
| Negative control 1 a | 0.05 | 0.01 ± 0.02 |
| Positive control P | 1 | 1 |
| Comparative example C.-E. | 0.73 | 0.02 ± 0.02 |

### Determination of viability of HL-60 cells (Table 4)

HL-60 cells grown in RPMI 1640 medium supplemented with 10 % FCS, 1 % L-glutamine and 1% penicillin were centrifuged, the medium was replaced with RPMI 1640 medium (5 % FCS, 1 % L-glutamine, 1% penicillin) to obtain suspensions containing 10⁶ cells per mL. Stock solutions of prodrugs of different concentrations (5 µL, solvent: DMF containing 2 % water and 1 % sodium ascorbate) were added to the cellular suspensions (500 µL) and incubated for specific periods of time. Four experiments were conducted for each concentration of the prodrug. At the end of the incubation period propidium iodide (PI, 1 µL, 1.5 mM in water) was added to label leaky cells and in 5 min the suspension of the cells was analyzed by using flow cytometry.

### Determination of viability of fibroplasts (Table 4)

Cells were grown either in DMEM medium (Dulbecco's Modified Eagle's Medium) supplemented with 10 % FCS, 1 % L-glutamine and 1% streptomycin/ penicillin up to 80-90 % confluence. Then the cells were trypsinated, washed, re-suspended in the same medium and spread in wells of a 96-wells microtiter plate (-25.000 cells per well, per 100 µL) and left standing at 37 °C in the chamber filled with CO₂ (5 %) for 5 h. Stock solutions of prodrugs of different concentrations (1 µL, solvent: DMF / water (1/3, v/v) containing 1 % sodium ascorbate) were added to the wells and incubated for specific periods of time. Four experiments were conducted for each concentration of the prodrug. Finally, (3-(4,5-dimethylthiazol-2-yl)-2,5-diphenyltetrazolium bromide (MTT, 20 µL of the solution prepared by dissolving MTT (5 mg) in PBS buffer (1 mL)) was added to each well, incubated for 3 h, treated with sodium dodecyl sulfate (SDS) solution (90 µL, 10 % solution in 0.01 M aqueous HCl) and incubated overnight. Then, intensity of absorbance at 590 nm was measured (MTT is converted to blue dye (λₘₐₓ= 590 nm) in live cells). Absorbance at 690 nm was taken as a baseline value. These data were applied to calculate the number of viable cells.

**Table 4 Toxicity of the prodrugs, comparative example C.E. and controls towards cancer (HL-60) and normal cells (fibroplasts).**

| Compound | Toxicity of the complexes: IC₅₀ (µM) | |
|---|---|---|
| | Human promyelocytic leukemia cells (HL-60) | Fibroplasts |
| Prodrug A | 26 ± 3 | - |
| Prodrug B | 12 ± 2 | > 50 |
| Prodrug C | 12 ± 1 | - |
| Prodrug D | 14 + 5 | - |
| Prodrug E | 39 ± 4 | - |
| Negative control 1 a | > 200 | - |
| Positive control P | 3 ± 1 | - |
| Comparative example C.-E. | 54 ± 5 | > 50 |

The results shown in Table 4 demonstrate that ferrocene-based compounds **I** according to the present invention, i.e. prodrugs **A, B, C** and **D** exhibit surprisingly high cytotoxicity having IC₅₀ values in the range of 12-26 µM for HL-60 cells. To the contrary, the IC₅₀ value of Comparative Example is much higher. In other words, the cytotoxicity of Comparative Example is far less when compared with the prodrugs **A** and **B** according to the present invention. Cytotoxicity of the representative prodrug B towards a non-cancerous cell line (Fibroplasts) is substantially lower (IC₅₀ > 50 µM, Table 4), which indicates that the prodrugs described in this invention are cell-specific.

The ferrocene-based compounds **I** according to the present invention form upon activation - in the case of R¹ = H - iron ions, and - in the case of R¹ ≠ H - highly toxic ferrocenium ions **6.** Both, iron ions and ferrocenium ions generate ROS catalytically, whereas the quinone methide suppresses the antioxidative defence system of the cell by alkylation of glutathione. These combined/synergistic effects induce quick increase of ROS concentration in the cells beyond the apoptotic level, since the natural defence mechanism of e.g. cancer cells is too slow to react to this massive increase of ROS amounts. Based on these combined/synergistic effects, the ferrocene-based compounds I are represent a novel class of highly efficient ROS regulating prodrugs, which, due to their low-cost and straightforward preparation, afford pharmaceutical compositions in high quantity and low cost. In addition, since the ferrocene-based compounds **I** according to the present invention are not activated, i.e. decomposed, in the microenvironment of normal cells (see Table 4, data on fibroplasts), such as low H₂O₂ concentration, the ferrocene-based compounds **I** are stable and remain intact under these conditions, and thus are non-toxic. Accordingly, the ferrocene-based compound **I** does not cause harmful side-effects as discussed in the case of conventional pharmaceuticals.

## Claims

1. A ferrocene-based compound of Formula (I): 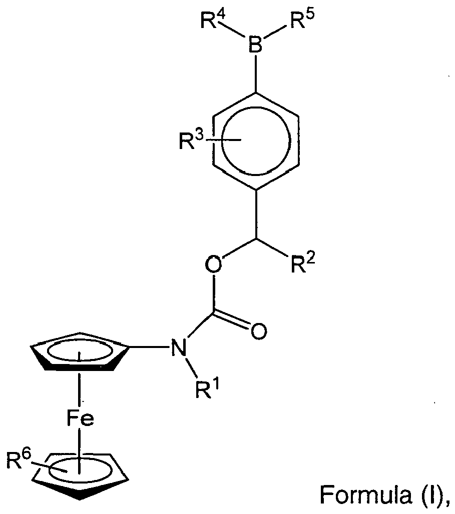 wherein R¹ represents H, a substituted or unsubstituted alkyl, a substituted or unsubstituted cycloalkyl, a substituted or unsubstituted aryl, a substituted or unsubstituted heteroaryl, a substituted or unsubstituted heteroalkyl, a substituted or unsubstituted cyclic heteroalkyl, a substituted or unsubstituted aralkyl, a sterine, a mono- or oligosaccharide;
R² is selected from the group consisting of H, alkoxy, alkyloxy, an acyl group, COOR⁷, or CONR⁸R⁹, wherein R⁷, R⁸ and R⁹ each independently represent H, a C₁-C₁₂ alkyl, a substituted or unsubstituted cycloalkyl, a substituted or unsubstituted aryl, a substituted or unsubstituted heteroaryl;
R³ is selected from the group consisting of H, alkyl group, aryl group, hetaryl group, a halogen atom, NO₂ or CN;
R⁴ and R⁵ independently represent a substituted or unsubstituted alkoxy group, wherein R⁴ and R⁵ together may form a 5 to 7 membered ring; and
R⁶ is selected from the group consisting of H, alkoxy, alkyloxy, an acyl group, COOR¹⁰, or CONR¹¹R¹², wherein R¹⁰, R¹¹ and R¹² each independently represent H, a C₁-C₁₂ alkyl, a substituted or unsubstituted cycloalkyl, a substituted or unsubstituted aryl, a substituted or unsubstituted heteroaryl;
wherein the ferrocene-based compound of Formula (I) having R¹, R², R³, R⁶ = H is not encompassed.

2. The ferrocene-based compound according to claim 1, wherein R⁴ and R⁵ are selected from the group consisting of methoxy, ethoxy, propoxy, isopropoxy, or wherein R⁴ and R⁵ are linked so as to form a group selected from -OCH₂CH₂O-, -OCH₂CH₂CH₂O-, -OC(Me)₂C(Me)₂O-, and -OCH₂C(Me)₂CH₂O-.

3. The ferrocene-based compound according to claim 1 or 2, wherein R¹ is C₁-C₄ alkyl, a substituted or unsubstituted benzyl or a sterine.

4. The ferrocene-based compound according to claim 3, wherein R¹ is benzyl, ethoxy benzyl, or a cholic acid residue.

5. The ferrocene-based compound according to any one of claims 1 to 4, wherein R² is H or COOH.

6. A ROS regulating prodrug, comprising the ferrocene-based compound according to any one of claims 1 to 5.

7. The ROS regulating prodrug according to claim 6, wherein the ROS regulating prodrug is activated with hydrogen peroxide at a concentration of > 1 µM.

8. A pharmaceutical composition containing the ROS regulating prodrug according to claim 6 or 7, and optionally a pharmaceutically acceptable carrier and/or diluent and/or adjuvant.

9. The pharmaceutical composition according to claim 8 for the treatment of an infectious disease or cancer.

10. The pharmaceutical composition according to claim 9, wherein the infectious disease is malaria.

11. The pharmaceutical composition according to claim 9, wherein the infectious disease is a bacterial infection.

12. The ferrocene-based compound according to any one of claims 1 to 5 for use in the treatment of an infectious disease or cancer.

13. The ferrocene-based compound according to any one of claims 1 to 5 for use in the treatment of malaria.

14. The ferrocene-based compound according to any one of claims 1 to 5 for use in the treatment of a bacterial infection.
